# EUROPÄISCHE PATENTSCHRIFT

(11) **EP 3 017 156 B1**
(45) Veröffentlichungstag und Bekanntmachung des Hinweises auf die Patenterteilung: **27.02.2019**
(21) Anmeldenummer: 14734809.8
(22) Anmeldetag: 01.07.2014
(51) Int. Cl.: F01L 1/344

(54) **ROTOR FÜR EINEN NOCKENWELLENVERSTELLER**
ROTOR FOR CAMSHAFT PHASER
ROTOR DE DÉPHASEUR D'ARBRE À CAMES

(30) Priorität: 05.07.2013 DE 102013107132; 05.07.2013 DE 102013107133; 12.07.2013 DE 102013107431
(43) Veröffentlichungstag der Anmeldung: 11.05.2016
(73) Patentinhaber: Hilite Germany GmbH, 97828 Marktheidenfeld (DE)
(72) Erfinder: HENTSCH, Florian, 73344 Gruibingen (DE); ISENBERG, Karl-Heinz, 54295 Trier (DE); BARTZSCH, Jens, 72141 Waldorfhäslach (DE); KLOTZ, Stefan, 72631 Aichtal (DE); MAIER, Rainer, 72649 Wolfschlugen (DE)
(86) Internationale Anmeldenummer: PCT/EP2014/063936
(87) Internationale Veröffentlichungsnummer: WO 2015/000883

(56) Entgegenhaltungen:
- DE-A1-102005 013 141
- DE-A1-102005 038 364
- JP-A- H11 182 216
- US-A1- 2012 298 060

## Beschreibung

### Stand der Technik

Die Erfindung betrifft einen Rotor für einen Nockenwellenversteller.

Es sind aus dem Stand der Technik unterschiedliche Ausführungsformen von Nockenwellenverstellern bekannt. Ein Beispiel hierfür sind hydraulische Nockenwellenversteller. Hydraulische Nockenwellenversteller können beispielsweise als Nockenwellenversteller ausgestaltet sein, die nach dem Flügelzellenprinzip arbeiten. Solche nach dem Flügelzellenbetrieb arbeitende Nockenwellenversteller sind beispielsweise aus Ausgestaltungen bekannt, in welcher zwei relativ zueinander bewegliche Bauteile als Stator und als Rotor ausgebildet sind, wobei der Stator eine Anzahl von Flügeln aufweist, welche sich von der Drehachse des Stators wegweisend erstrecken. Stator und Rotor sind in solchen Nockenwellenverstellern typischerweise koaxial zueinander positioniert, wobei beispielsweise ein in einem durch den Stator gebildeten Hohlraum befindlicher Rotor gemeinsam mit dem Stator wenigstens zwei Hydraulikkammern ausbildet. Beispielsweise bewirkt in einer solchen Ausgestaltung ein Füllen von einer der Hydraulikkammern mit einem geeigneten Fluid durch auf den Flügel des Rotors einwirkenden Druck ein Drehen des Rotors und hierdurch ein Verstellen eines Drehwinkels der Nockenwelle und hierdurch die Veränderung der durch die einzelnen auf der Nockenwelle befindlichen Nocken ausgelösten Ventilöffnungs- und verschlusszeitpunkte.

Aus der JPH11182216A ist es beispielsweise bekannt, an den Stirnflächen des Rotors ein Erhebungsprofil mit wenigstens zwei Stegen vorzusehen.

### Offenbarung der Erfindung

Der Erfindung liegt die Aufgabe zugrunde, einen Rotor für einen Nockenwellenversteller zur Verfügung zu stellen, welcher gegenüber den bisher bekannten Rotoren für Nockenwellenversteller verbesserte Eigenschaften aufweist.
Die Aufgabe wird mit einem Rotor für einen Nockenwellenversteller mit den Merkmalen des Anspruchs 1 gelöst. Weitere vorteilhafte Ausgestaltungen und Weiterbildungen gehen aus den weiteren Ansprüchen, der nachfolgenden Beschreibung und der Zeichnung hervor.

Es wird ein Rotor für einen Nockenwellenversteller vorgeschlagen. Der Rotor ist für eine Rotation um eine Drehachse vorgesehen. Der Rotor weist wenigstens einen Flügel auf, welcher von einem Zentralbereich des Rotors sich in im Wesentlichen radial von der Drehachse wegweisender Richtung erstreckt.
Der Rotor weist eine Oberfläche auf. Die Oberfläche des Rotors weist auf:
- wenigstens eine erste Stirnfläche,
- wenigstens eine zur ersten Stirnfläche parallele zweite Stirnfläche,
- wenigstens eine erste Außenumfangsteilfläche des ersten Flügels.
An der Oberfläche des Rotors ist ein Erhebungsprofil ausgebildet.
Das Erhebungsprofil weist wenigstens ein erstes Stegemuster mit wenigstens zwei Stegen auf, welches an der ersten Stirnfläche angeordnet ist. Alternativ bzw. zusätzlich weist das Erhebungsprofil wenigstens ein zweites Stegemuster mit wenigstens zwei Stegen auf, welches an der zweiten Stirnfläche angeordnet ist.
Der Begriff des Stegs ist dahingehend zu verstehen, dass es sich bei einem Steg um eine Erhebung handelt, welche in einer ersten Richtung eine wenigstens doppelt so große laterale Ausdehnung als in einer ersten Richtung aufweist.
Jeweils ein erster Steg und ein zweiter Steg laufen aufeinander zu und gehen ineinander über. Insbesondere kann auch vorgesehen sein, dass der erste Steg und der zweite Steg einander kreuzen.
Der Begriff der Oberfläche des Rotors ist dahingehend zu verstehen, dass die Oberfläche sämtliche Teiloberflächen des Rotors umfasst. Die Oberfläche kann sich also aus mehreren unterschiedlichen Flächen zusammensetzen, die beispielsweise in verschiedenen Orientierungen zueinander angeordnet sein können oder durch scharfe Kanten voneinander getrennt sein können.

Mit der Bezugnahme darauf, dass die zweite Stirnfläche zu der ersten Stirnfläche parallel orientiert ist, sollen geringere Abweichungen von einer optimalen parallelen Orientierung umfasst sein. So soll beispielsweise mit umfasst sein, dass die zweite Stirnfläche mit einem Winkel von 5 Grad zur ersten Stirnfläche gekippt orientiert ist. Des Weiteren kann beispielsweise vorgesehen sein, dass die Verkippung weniger als 2 Grad beträgt.
In einer bevorzugten Ausgestaltung ist der Begriff parallel dahingehend zu verstehen, dass im Rahmen üblicher fertigungstechnischer Toleranzen keine Verkippung der ersten Stirnfläche gegen die zweite Stirnfläche vorliegt.

In einer bevorzugten Ausbildung des Rotors ist vorgesehen, dass die erste Stirnfläche und die zweite Stirnfläche zueinander eine Parallelität aufweisen, welche innerhalb eines Bereiches zwischen den Werten 0,02 mm bis 0,03 mm liegt, wobei 0,02 mm und 0,03 mm jeweils umfasst sein sollen. In einer weiteren bevorzugten Ausgestaltung kann vorgesehen sein, dass die Parallelität innerhalb eines Bereiches von 0,020 mm bis 0,030 mm befindlich ist, wobei die Werte 0,020 mm und 0,030 mm in dem angegebenen Bereich ebenfalls mit umfasst sein sollen.

In einer weiteren Ausgestaltung des Rotors kann vorgesehen sein, dass eine Toleranz einer Höhe des Rotors innerhalb eines Bereichs von 0,012 mm bis 0,020 mm befindlich ist. Die Werte 0,012 mm sowie 0,020 mm sollen bei der Angabe dieses Bereichs jeweils mit umfasst sein.

Der Begriff der Höhe bezieht sich in der hier benutzten Nomenklatur auf den Abstand der jeweils weitest entfernten Erstreckungen der ersten Stirnfläche und der zweiten Stirnfläche voneinander, so dass beispielsweise stirnseitig angeordnete Erhebungen oder Ausformungen die Höhe des Rotors vergrößern.

Der Begriff des Erhebungsprofils bezeichnet eine Gesamtheit von einer oder mehreren Strukturen, welche sich von einer Grundebene der Oberfläche aus der Oberfläche heraus erheben. Das Erhebungsprofil kann dadurch gekennzeichnet sein, dass eine oder mehrere Strukturen Bestandteil des Erhebungsprofils sein können. Die eine Struktur oder mehreren Strukturen können in einer gleichmäßigen oder auch in einer ungleichmäßigen Ordnung auf der Oberfläche angeordnet sein. Des Weiteren können sich die Strukturen des Erhebungsprofils in ihrer Höhe und/oder ihrer lateralen Ausdehnung voneinander unterscheiden, aber auch ein Vorliegen von identischen Strukturen, die sich somit nur in ihrer Positionierung unterscheiden, kann vorgesehen sein. Es kann beispielsweise vorgesehen sein, dass das Erhebungsprofil Strukturen aufweist, welche miteinander vernetzt sind. Ebenfalls kann in einer Ausführungsform des Rotors vorgesehen sein, dass das Erhebungsprofil Strukturen aufweist, welche nicht miteinander vernetzt sind.

Beispielsweise kann vorgesehen sein, dass das Erhebungsprofil Strukturen aufweist, welche isoliert von anderen Strukturen des Erhebungsprofils angeordnet sind. Beispielsweise kann vorgesehen sein, dass das Erhebungsprofil als noppenförmige, als kugelabschnittförmige, als ellipsoidabschnittförmige, als längshügelförmige, trapezoidförmige und/oder als quaderförmige Strukturen ausgebildet ist. Geringfügige Abweichungen dieser genannten Ausbildungen der Strukturen, beispielsweise in Gestalt von Kantenrundungen, sollen ebenfalls mit umfasst sein.

Insbesondere bezeichnet der Begriff des Erhebungsprofils die Gesamtheit sämtlicher an der Oberfläche des Rotors angebrachte Strukturen.

In einer weiteren Ausgestaltung des Rotors kann beispielsweise vorgesehen sein, dass der Rotor aus zwei separat hergestellten Rotorteilen gefügt ist. Insbesondere kann beispielsweise auch vorgesehen sein, dass der Rotor aus zwei identischen Rotorteilen gefügt ist. Ein Vorteil eines Fügens aus zwei identischen Rotorteilen ist, dass die Fertigung deutlich vereinfacht wird.

In einer Ausgestaltung des Rotors kann beispielsweise vorgesehen sein, dass das Erhebungsprofil wenigstens ein an der ersten Außenumfangsteilfläche angeordnetes Längsrillenprofil mit einer Anzahl von wenigstens zwei Längsrillen aufweist.

Der Begriff der Längsrille bezieht sich insbesondere darauf, dass die Längsrille entlang einer ersten Richtung eine deutlich größere Ausdehnung hat als entlang ihrer zweiten Richtung. Hiermit soll insbesondere vorgesehen sein, dass die Ausdehnung entlang der ersten Richtung die Ausdehnung entlang der zweiten Richtung um wenigstens 100 % übersteigt.

Der Begriff der Außenumfangsteilfläche bezieht sich auf solche Flächen, welche bei einem Drehen des Rotors wenigstens eine tangentiale Drehkomponente der Fläche aufweisen bzw. in anderen Worten, welche von einem radial von der Drehachse wegweisenden Strahl geschnitten würden.

Insbesondere kann vorgesehen sein, dass es sich bei der ersten Außenumfangsteilfläche beispielsweise um eine Teilfläche handelt, welche in einer Mantelfläche eines Kreiszylinders liegt, welcher bei einer Rotation eines entsprechend geformten Rotors gebildet würde.

In einer Ausgestaltung kann vorgesehen sein, dass wenigstens zwei Längsrillen einem gradlinigen Verlauf folgen. Eine weitere Ausgestaltung kann vorsehen, dass alle Längsrillen einem gradlinigen Verlauf folgen. In einer weiteren Ausgestaltung kann vorgesehen sein, dass zwei Längsrillen des Längsrillenprofils zueinander parallel orientiert sind. In einer weiteren bevorzugten Ausgestaltung kann vorgesehen sein, dass alle Längsrillen des Längsrillenprofils zueinander parallel orientiert sind.

In einer weiteren Ausgestaltung des Rotors kann beispielsweise vorgesehen sein, dass wenigstens eine Längsrille sich entlang einer gesamten Außenumfangsteilflächenhöhe erstreckt. Mit dem Begriff der Außenumfangsteilflächenhöhe ist die Erstreckung der ersten Außenumfangsteilfläche in eine zur Drehachse des Rotors parallele Richtung bezeichnet. Das bedeutet, dass die Außenumfangsteilflächenhöhe nicht an jeder Position der Außenumfangsteilfläche gleich sein muss.

In einer weiteren Ausgestaltung des Rotors kann vorgesehen sein, dass wenigstens zwei Längsrillen in einer zur Drehachse parallelen Richtung orientiert sind. Insbesondere kann vorgesehen sein, dass alle Längsrillen in einer Drehachse parallelen Richtung orientiert sind, dass also alle Längsrillen einer axialen Verlaufsrichtung folgen.

Insbesondere kann eine Ausgestaltung des Rotors vorgesehen sein, in welcher die erste Außenumfangsteilfläche des Rotors eine Teilfläche eines Kreiszylinders ist. In einer bevorzugten Ausgestaltung des Rotors, in welcher die erste Außenumfangsteilfläche des Rotors eine Teilfläche eines Kreiszylinders ist, kann bevorzugt vorgesehen sein, dass alle Längsrillen parallel zur Drehachse ausgebildet sind, also alle Längsrillen einer axialen Verlaufsrichtung folgen. Eine solche Ausgestaltung des Rotors als Rotor mit einer in zylindrischen Umhüllenden und einer axialen Ausgestaltung der an den Außenumfangsteilflächen angeordneten Längsrillen hat durch seine hohe Symmetrie unter anderem den Vorteil, einseitige Belastungen und hierdurch partiell höheren Verschleiß weitgehend zu minimieren. Ein weiterer Vorteil einer solchen Ausgestaltung des Rotors liegt in einer möglichst vorteilhaft vornehmbaren Herstellung, da die in einer axialen Verlaufsrichtung orientierten Längsrillen beispielsweise in einem Verfahrensschritt eines pulvermetallurgischen Verfahrens beispielsweise durch Pressen eines Rotorpresslings oder Rotorgrünlings in eine entsprechend ausgebildete Matrize mit axialer Druckbeaufschlagung erfolgen kann.

In einer Ausgestaltung des Rotors kann beispielsweise vorgesehen sein, dass die erste Stirnfläche als Ebene ausgebildet ist. In einer weiteren Ausgestaltung kann beispielsweise vorgesehen sein, dass die zweite Stirnfläche als Ebene ausgebildet ist. In einer Ausgestaltung, in welcher sowohl die erste Stirnfläche und als auch die zweite Stirnfläche als Ebene ausgebildet sind und gleichzeitig die erste Stirnfläche parallel zur zweiten Stirnfläche ausgebildet ist, ist die Außenumfangsteilflächenhöhe an jeder Position der Außenumfangsteilfläche identisch. Ein Spezialfall einer solchen Ausgestaltung ist die oben bereits beschriebene Ausgestaltung des Rotors als Rotor mit einer kreiszylindrischen Umhüllenden.

In der hier und in der gesamten Anmeldung genutzten Nomenklatur ist der Begriff der Ebene dahingehend zu verstehen, dass neben einer Grundfläche auch das Erhebungsprofil mit umfasst sein soll. Der Begriff der Ebene ist daher nicht derart im Wortsinne zu verstehen, dass es etwa sich um eine perfekt glatte Fläche handeln würde. Stattdessen sollen auch Strukturen als Bestandteil der Ebene aufgefasst werden.

In einer bevorzugten Ausgestaltung des Rotors ist vorgesehen, dass alle an der Außenumfangsteilfläche beziehungsweise den Außenumfangsteilflächen angeordneten Längsrillen sich vollständig entlang der gesamten Außenumfangsteilflächenhöhe erstrecken.

In einer weiteren Ausgestaltung des Rotors kann beispielsweise vorgesehen sein, dass wenigstens eine Längsrille eine kreisabschnittförmige, eine ellipsenabschnittförmige, eine trapezförmige oder eine rechteckförmige Querschnittfläche aufweisen mit der Abweichung, dass als Folge der Krümmung der Außenumfangsteilfläche anstelle einer geradlinigen Grundlinie die genannten Querschnittflächen eine entsprechend gekrümmte Grundlinie aufweisen. Außerdem sollen geringfügige Abweichungen dieser genannten Ausbildungen der Strukturen, beispielsweise in Gestalt von Kantenrundungen, ebenfalls mit umfasst sein.

In einer bevorzugten Ausgestaltung des Rotors ist beispielsweise vorgesehen, dass alle Längsrillen eine der vorgenannten Querschnittflächen aufweisen. Ebenfalls kann beispielsweise eine Ausgestaltung eines Rotors vorgesehen sein, die dahingehend ausgebildet ist, dass eine Längsrille entlang ihrer Längserstreckung eine veränderliche Querschnittfläche aufweist.
In einer bevorzugten Ausgestaltung ist jedoch vorgesehen, dass die Querschnittfläche entlang ihrer Längserstreckung gleichförmig bleibt sowie auch von ihrem Flächeninhalt gleich bleibt.

Der Begriff der Querschnittfläche bezieht sich auf die Fläche, welche bei einem Schnitt der Längsrille senkrecht zu ihrer Längserstreckung an der Position des Schnitts sich bis zum Übergang der Längsrille in die Außenumfangsteilfläche bildet.

In einer Ausgestaltung des Rotors kann beispielsweise vorgesehen sein, dass ein Zwischental, welches zwischen zwei benachbarten Längsrillen befindlich ist, eine ellipsenabschnittförmig, eine trapezförmig oder eine rechteckförmige Querschnittfläche aufweist. In einer weiteren Ausgestaltung kann beispielsweise vorgesehen sein, dass alle Zwischentäler, welche sich über die Flächenerstreckung der Außenumfangsteilfläche ausbilden, einen kreisabschnittförmigen Querschnitt aufweisen. In einer weiteren speziellen Ausbildung kann beispielsweise vorgesehen sein, dass ein erster Radius der kreisabschnittförmigen Querschnittfläche aufweisenden Längsrillen identisch ist mit einem zweiten Abschnitt der Zwischentäler der kreisabschnittförmigen Querschnitte.

Die Ausbildung des Längsrillenprofils in einer der beschriebenen beispielhaft vorgesehenen Ausgestaltungen ergibt den funktionellen Vorteil, dass sich während des Betriebs des hydraulischen Nockenwellenverstellers ein Schmierfilm des zur Nockenwellenverstellung verwendeten Fluids, beispielsweise eines Öls, zwischen den Längsrillen bildet. Durch den sich hierdurch bildenden Schmierfilm wird sowohl erreicht, dass die Haftreibung der Außenumfangsteilfläche gegenüber einer Innenfläche des Stators des hydraulischen Nockenwellenverstellers reduziert wird. Des Weiteren wird zusätzlich auch die Gleitreibung beträchtlich reduziert. Diese Effekte werden zusätzlich dadurch begünstigt, dass der Anteil der Fläche der Außenumfangsteilfläche beziehungsweise der Außenumfangsteilflächen deutlich geringer ist, der mit einer anderen Fläche, beispielsweise einer Innenfläche eines Stators des hydraulischen Nockenwellenverstellers, in Berührung kommt. Als ein weiterer positiver Effekt, der sich durch die Reduktion des Moments der Gleitreibung ergibt, ist ein sich erweisendes hervorragendes Laufverhalten sowie auch eine beträchtliche Erhöhung der Verstellgeschwindigkeit.

In einem Querschnitt ergibt sich eine Höhe der an der Außenumfangsteilfläche als Längsrillenprofil ausgebildeten Teilerhebung. Bei Betrachtung des Längsrillenprofils von einer Sohle des Zwischentals zu seiner maximalen radialen Erstreckung kann beispielsweise vorgesehen sein, dass die Höhe geringer als 0,05 mm ist. In einer weiteren bevorzugten Ausgestaltung kann vorgesehen sein, dass die Höhe der Wellenerhebung geringer als 0,03 mm ist. In einer bevorzugten Ausgestaltung kann beispielsweise vorgesehen sein, dass die Höhe des Längsrillenprofils 0,02 mm oder geringer ist. In einer besonders bevorzugten Ausgestaltung des Rotors kann beispielsweise vorgesehen sein, dass die Höhe des Längsrillenprofils 0,02 mm beträgt.

Neben dem Vorteil einer deutlichen Reduktion der Haftreibung und/oder der Gleitreibung und der hierdurch sich ergebenden deutlichen Erhöhung der Verstellgeschwindigkeit des Rotors von einer ersten Position zu einer zweiten Position ergibt sich der weitere Vorteil einer deutlichen Erleichterung der fertigungstechnischen Herstellbarkeit des Rotors. Insbesondere bei einem gegebenenfalls erfolgenden fertigungstechnischen Verfahrensschritt eines Kalibrierens des Rotors wird das Kalibrieren, insbesondere durch die geringeren Erfordernisse an radial wirkende Kräfte beträchtlich erleichtert.

Erfindungsgemäß weist das erste Stegemuster und/oder das zweite Stegemuster jeweils vier Stege auf, so dass vier Stege jeweils eine Vertiefung bilden. Dabei laufen vorzugsweise jeweils zwei Stege des Stegemusters aufeinander zu und kreuzen sich. Mit dieser Formulierung soll ausgedrückt sein, dass jeder der vier Stege mindestens einen anderen der vier Stege kreuzt. Insbesondere soll nicht ausgedrückt sein, dass die Stege sich in einem gemeinsamen Punkt kreuzen. Der Begriff der Vertiefung ist jeweils relativ zur in axialer Richtung äußersten Ausdehnung des Stegs zu verstehen.

Die gebildeten Vertiefungen bewirken den Vorteil, dass diese als Reservoir, beispielsweise für ein Schmiermittel, wie etwa Öl, fungieren können. Hierdurch sowie des Weiteren durch die geringere Berührfläche, beispielsweise mit einem Inneren eines Stators des Nockenwellenverstellers, kann weiterhin erreicht werden, dass eine Haftreibung und/oder eine Gleitreibung während eines Bewegens des Rotors innerhalb des Stators reduziert wird und hierdurch beispielsweise auch eine Umschaltgeschwindigkeit des Nockenwellenverstellers erhöht wird.

In einer Ausgestaltung des Rotors kann vorgesehen sein, dass das erste Stegemuster wenigstens einen Steg aufweist, welcher als im Wesentlichen mit der Drehachse koaxiale Linienerhebung ausgebildet ist. Die Begrifflichkeit der im Wesentlichen koaxialen Linienerhebung bezieht sich darauf, dass das erste Stegemuster wenigstens einen Steg aufweist, welcher als Kreisausschnitt ausgebildet ist, wobei der Mittelpunkt des Kreises, welcher auch den Kreisausschnitt aufweist, ein Punkt ist, der auf der Drehachse liegt. Des Weiteren kann vorgesehen sein, dass das erste Stegemuster wenigstens einen Steg aufweist, welcher als im Wesentlichen von der Drehachse radial abgehend orientierte Linienerhebung ausgebildet ist. Dies bezieht sich darauf, dass der Steg als Linienerhebung ausgebildet ist, welcher im Wesentlichen als Strahl ausgebildet ist, welcher auf einer radial von der Drehachse wegweisenden Richtung liegend ist. Ebenfalls kann vorgesehen sein, dass das zweite Stegemuster einen oder mehrere der vorgenannten Ausbildungen der Stege aufweist.

Eine weitere Ausbildung des Rotors kann vorsehen, dass das erste Stegemuster und/oder das zweite Stegemuster wenigstens einen Steg aufweist, welcher als im Wesentlichen mit der Drehachse koaxiale Linienerhebung ausgebildet ist als auch einen Steg aufweist, welcher als im Wesentlichen von der Drehachse radial abgehend orientierte Linienerhebung orientiert ist.

Eine weitere Ausbildung des Rotors kann vorgesehen sein, in welcher das erste Stegemuster die gesamte erste Stirnfläche ausfüllt und/oder das zweite Stegemuster die gesamte zweite Stirnfläche ausfüllt.

Als ein Beispiel kann vorgesehen sein, dass das erste Stegemuster eine Anzahl von mehreren Stegen aufweist, welche als im Wesentlichen mit der Drehachse koaxiale Linienerhebung ausgebildet ist. Gleichzeitig kann vorgesehen sein, dass das erste Stegemuster eine Anzahl von mehreren im Wesentlichen als von der Drehachse radial abgehend orientierten Linienerhebung ausgebildeten Stegen aufweist. Insbesondere kann beispielsweise vorgesehen sein, dass die Stege, welche als von der Drehachse radial abgehend orientierte Linienerhebung ausgebildet sind, jeweils zueinander in regelmäßigen Winkelabständen orientiert sind. Ebenfalls kann vorgesehen sein, dass zwei benachbarte als koaxiale Linienerhebung ausgebildete Stege jeweils in einem gleichen Abstand zum jeweils nächsten benachbarten Steg ausgebildet sind. Ebenfalls kann vorgesehen sein, dass die zweite Stirnfläche ein gleiches Stegemuster aufweist wie die erste Stirnfläche.

Eine Ausbildung des Rotors kann vorgesehen sein, in welcher das erste Stegemuster und/oder das zweite Stegemuster aufweist:
- wenigstens einen als im Wesentlichen mit der Drehachse koaxiale Linienerhebung ausgebildeten Steg und/oder
- wenigstens einen als im Wesentlichen von der Drehachse radial abgehend orientierte Linienerhebung ausgebildeten Steg.

In einer Ausbildung des Rotors kann vorgesehen sein, dass das erste Stegemuster eine Anzahl von koaxialen Linienerhebungen und radialen Linienerhebungen aufweist, die das erste Stegemuster wenigstens teilweise, bevorzugt vollständig, umlaufend umgrenzend und/oder dass das zweite Stegemuster eine Anzahl von koaxialen Linienerhebungen und radialen Linienerhebungen aufweist, die das zweite Stegemuster wenigstens teilweise, bevorzugt vollständig umlaufend umgrenzen. Hierdurch soll bewirkt werden, dass eine Anzahl von Vertiefungen, bevorzugt alle Vertiefungen auf der ersten Stirnseite und/oder zweiten Stirnfläche zu einem Äußeren des Körpers hin noch einmal von einem Teil des Stegemusters umgrenzt sind. Dieser Teil des Stegemusters, welcher durch die Anzahl von koaxialen Linienerhebungen und radialen Linienerhebungen wie beschrieben gebildet wird, bildet somit eine Umlauferhebung. Diese Umlauferhebung dichtet beispielsweise bei Anliegen der ersten Stirnfläche und/oder der zweiten Stirnfläche an eine Innenfläche des hydraulischen Nockenwellenverstellers, beispielsweise des Stators oder eines anderen Bauteils des hydraulischen Nockenwellenverstellers, alle Vertiefung gegen ein Äußeres ab. Hierdurch wird eine Leckage von einem beispielsweise in den Vertiefungen befindlichen Schmiermittel nach außen hin reduziert.

In einer weiteren Ausgestaltung des Rotors ist beispielsweise vorgesehen, dass eine Erhebungshöhe der Linienerhebung des ersten Stegemusters und/oder eine Erhebungshöhe der Linienerhebung des zweiten Stegemusters 1,00 mm oder weniger beträgt. Der Begriff der Erhebungshöhe der Linienerhebung bezieht sich auf den Abstand eines höchsten Punktes des ersten Stegemusters zu dem tiefsten Punkt der Vertiefung. In einer weiteren Ausgestaltung kann vorgesehen sein, dass eine Erhebungshöhe der Linienerhebung nicht des ersten Stegemusters global betrachtet, sondern lediglich lokal betrachtet für eine Anzahl von Stegen des Stegemusters 1,00 mm oder weniger beträgt.

In einer weiteren Ausgestaltung des Rotors ist beispielsweise vorgesehen, dass eine Erhebungshöhe der Linienerhebung des ersten Stegemusters und/oder eine Erhebungshöhe der Linienerhebung des zweiten Stegemusters 0,20 mm oder weniger beträgt. Der Begriff der Erhebungshöhe der Linienerhebung bezieht sich auf den Abstand eines höchsten Punktes des ersten Stegemusters zu dem tiefsten Punkt der Vertiefung. In einer weiteren Ausgestaltung kann vorgesehen sein, dass eine Erhebungshöhe der Linienerhebung nicht des ersten Stegemusters global betrachtet, sondern lediglich lokal betrachtet für eine Anzahl von Stegen des Stegemusters 0,20 mm oder weniger beträgt.

In einer weiteren Ausgestaltung kann beispielsweise vorgesehen sein, dass einer Erhebungshöhe der Linienerhebung des ersten Stegemusters und/oder einer Erhebungshöhe der Linienerhebung des zweiten Stegemusters 0,10 mm oder mehr beträgt. Insbesondere kann vorgesehen sein, dass eine Erhebungshöhe der Linienerhebungen des ersten Stegemusters und/oder eine Erhebungshöhe der Linienerhebungen des zweiten Stegemusters in einem Bereich zwischen 0,10 mm und 0,20 mm liegt. Es ist nicht erforderlich, dass jede Linienerhebung des ersten Stegemusters und/oder jede Linienerhebung des zweiten Stegemusters eine gleiche Höhe aufweist. Vielmehr kann beispielsweise auch vorgesehen sein, dass zwar alle Erhebungshöhen aller Linienerhebungen in dem vorgenannten Bereich liegen, jedoch einzelne Linienerhebungen gezielt unterschiedliche Höhen aufweisen. Insbesondere kann beispielsweise vorgesehen sein, dass bei dem Stegemuster die nach außen hin abschließenden, also umlaufend oder teilweise umlaufend umgrenzenden Linienerhebungen etwas höher als die anderen Linienerhebungen sind. Hierdurch kann sichergestellt werden, dass eine Leckage reduziert wird.

In einer weiteren Ausbildung kann vorgesehen sein, dass die Erhebungshöhen der Linienerhebung des ersten Stegemusters über die gesamte Fläche der ersten Stirnfläche identisch sind. In einer anderen Ausgestaltung kann vorgesehen sein, dass Erhebungshöhen der Linienerhebungen des zweiten Stegemusters über die gesamte Fläche der zweiten Stirnfläche identisch ist. Einer anderen Ausgestaltung kann weiterhin vorgesehen sein, dass die Erhebungshöhe der Linienerhebungen des ersten Stegemusters und die Erhebungshöhe der Linienerhebungen des zweiten Stegemusters über die jeweils gesamte erste Stirnfläche und die gesamte zweite Stirnfläche identisch ist.

In einer Ausbildung des Rotors kann beispielsweise vorgesehen sein, dass das erste Stegemuster und das zweite Stegemuster identisch ausgebildet sind.

In einer weiteren Ausgestaltung kann vorgesehen sein, dass der Rotor teilweise oder vollständig mittels eines Sinterverfahrens hergestellt ist. Ebenfalls kann vorgesehen sein, dass der Rotor teilweise oder vollständig aus einem Sintermetall, einem Sinterstahl und/oder einer Sinterkeramik besteht.

Ein weiterer Gedanke der Erfindung sieht ein Verfahren zur Herstellung eines Rotors mit einem an der Oberfläche des Rotors ausgebildeten Erhebungsprofil vor. Das Verfahren weist wenigstens die folgenden Schritte auf:
- Ausbilden eines Rotors, wobei der Rotor wenigstens aufweist:
   - einen ersten Flügel,
   - eine Oberfläche, wenigstens umfassend eine erste Stirnfläche, eine zur ersten Stirnfläche parallele zweite Stirnfläche sowie eine erste Außenumfangsteilfläche des ersten Flügels;
- Ausformen eines Erhebungsprofils an der Oberfläche;
- ein nach dem Ausformen des Erhebungsprofils erfolgendes Nachformen des Erhebungsprofils unter Druckbeaufschlagung.

Es kann beispielsweise vorgesehen sein, dass der Rotor mittels eines Sinterverfahrens hergestellt wird. Beispielsweise kann vorgesehen sein, dass eine Herstellung des Rotors aus einem Sintermetall, einem Sinterstahl und/oder einer Sinterkeramik erfolgt.

In einer Ausbildung des Verfahrens kann beispielsweise vorgesehen sein, dass das Ausbilden des Rotors mittels eines Pressens einer Pulvermischung zu einem Grünling erfolgt. Das Ausformen des Erhebungsprofils kann beispielsweise während des Pressens durch Einpressen unter Nutzung einer entsprechend ausgebildeten Pressmatrize und/oder eines oder mehrerer entsprechend ausgebildeter Pressstempel erfolgen.

Es kann des Weiteren beispielsweise vorgesehen sein, dass nach der Ausbildung des Rotors und nach dem Ausformen des Erhebungsprofils ein Sintern des Rotors erfolgt.

In einer möglichen Ausbildung des Verfahrens kann beispielsweise vorgesehen sein, dass nach dem Sintern des Rotors das Nachformen des Erhebungsprofils vorgenommen wird.

Eine weitere Ausbildung des Verfahrens zur Herstellung eines Rotors kann dahingehend ausgestaltet sein, dass das Erhebungsprofil wenigstens ein an der ersten Außenumfangsteilfläche aufweisendes Längsrillenprofil aufweist. Das Nachformen des Erhebungsprofils kann dahingehend vorgesehen sein, dass ein Kalibrieren des Längsrillenprofils erfolgt.

Das Kalibrieren des Längsrillenprofils kann beispielsweise durch ein Pressen des Rotors in eine entsprechen vorgesehene Kalibriermatrize vorgesehen sein.

Ebenfalls kann vorgesehen sein, dass das Erhebungsprofil wenigstens ein erstes Stegemuster mit zwei Stegen aufweist, welches an der ersten Stirnfläche angeordnet ist und/oder das Erhebungsprofil wenigstens ein zweites Stegemuster mit zwei Stegen aufweist, welches an der zweiten Stirnfläche angeordnet ist.

Das Verfahren zur Herstellung des Rotors kann derart ausgestaltet sein, dass das Nachformen des Erhebungsprofils ein stirnseitiges Maßprägen aufweist.

Bei einem Rotor, welcher sowohl wenigstens ein Längsrillenprofil aufweist, welches wenigstens an der ersten Außenumfangsteilfläche angeordnet ist, als auch wenigstens ein Stegemuster an einer der beiden Stirnflächen aufweist oder aber auch an beiden Stirnflächen jeweils wenigstens ein Stegemuster aufweist, kann beispielsweise vorgesehen sein, dass das Kalibrieren als auch das Maßprägen wenigstens teilweise gleichzeitig erfolgt.

Es kann jedoch ebenfalls vorgesehen sein, dass das Kalibrieren und das Maßprägen sequentiell erfolgt. Die sequentielle Hintereinanderschaltung der Verfahrensschritte des Kalibrierens und des Maßprägens kann hierbei in jeder denkbaren Reihenfolge vorgesehen sein.

In einer Ausbildung des Verfahrens kann vorgesehen sein, dass das Ausbilden des Rotors ein Fügen des Rotors aus zwei separat hergestellten Rotorteilen umfasst. Hierbei erfolgt das Nachformen des Erhebungsprofils nach dem Fügen des Rotors.

Eine vorteilhafte Ausbildung eines Verfahrens, welches ein Fügen des Rotors aus zwei separat hergestellten Rotorteilen vorsieht, ist dahingehend ausgestaltet, dass nach dem Sintern der Rotorteile das Fügen erfolgt und wenigstens teilweise gleichzeitig mit dem Fügen das Nachformen des Erhebungsprofils vorgenommen wird.

Eine vorteilhafte Ausbildung eines Verfahrens, welches ein Fügen des Rotors aus zwei separat hergestellten Rotorteilen vorsieht, ist dahingehend ausgestaltet, dass nach dem Sintern der Rotorteile das Fügen erfolgt und nach Beendigung des Fügens das Nachformen des Erhebungsprofils an dem gefügten Rotor vorgenommen wird.

### Zeichnungen

Weitere vorteilhafte Ausgestaltungen und Weiterbildungen gehen aus den nachfolgenden Figuren hervor. Die aus den Figuren hervorgehenden Einzelheiten und Merkmale sind jedoch nicht auf diese beschränkt. Vielmehr können ein oder mehrere Merkmale mit ein oder mehreren Merkmalen aus der obigen Beschreibung zu neuen Ausgestaltungen verknüpft werden. Insbesondere dienen die nachfolgenden Ausführungen nicht als Beschränkung des jeweiligen Schutzbereiches, sondern erläutern einzelne Merkmale sowie ihr mögliches Zusammenwirken untereinander.

### Es zeigen beispielhaft:

- Fig. 1:: Einen Rotor für einen Nockenwellenversteller in einer Aufsicht auf eine erste Stirnfläche;
- Fig. 2:: Ausschnitt aus Fig. 1 gemäß Markierung "V";
- Fig. 3:: Ausschnitt aus Fig. 1 gemäß Markierung "Y";
- Fig. 4:: Ausgestaltung eines ersten Flügels eines Rotors;
- Fig. 5:: Schnitt gemäß Ansicht G-G;
- Fig. 6:: Ausschnitt aus Fig. 3 gemäß Markierung "U";
- Fig. 7:: Eine Ausgestaltung eines Rotors für einen Nockenwellenversteller in einer perspektivischen Ansicht;
- Fig. 8:: Eine Ausgestaltung eines Rotors für einen Nockenwellenversteller in einer perspektivischen Ansicht sowie in Explosionsdarstellung;
- Fig. 9:: Eine Ausgestaltung eines Rotors für einen Nockenwellenversteller in einer perspektivischen Ansicht sowie in einer gefügten Darstellung; und
- Fig. 10:: Eine weitere Ausgestaltung des ersten Flügels.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

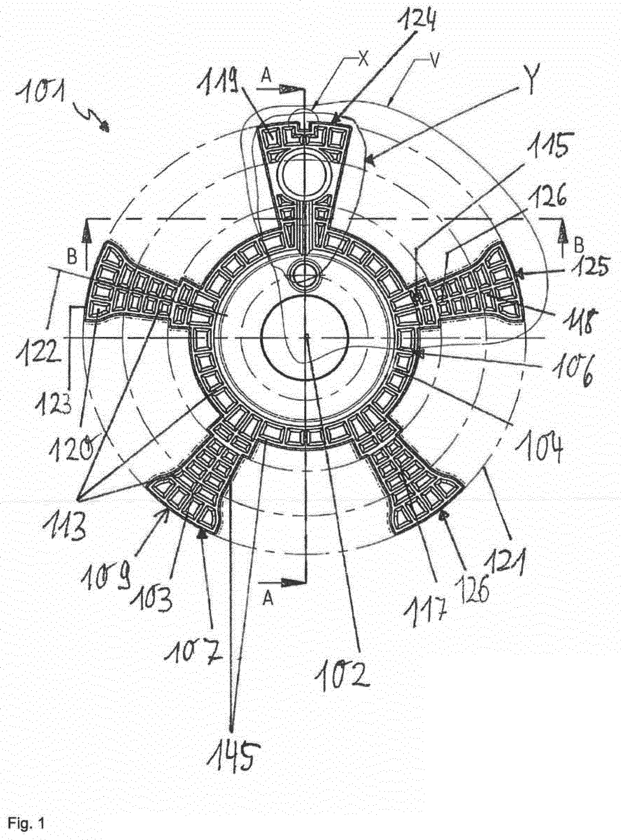

Fig. 1 ist eine Ausgestaltung eines Rotors für einen Nockenwellenversteller zu entnehmen. Der Rotor 101 ist in einer Aufsicht auf eine erste Stirnfläche 104 dargestellt. Der Rotor 101 weist des Weiteren einen ersten Flügel103 sowie vier weitere Flügel 117, 118, 119 und 120 auf. Eine Außenumfangsteilfläche 109 des ersten Flügels 103 sowie die weiteren entsprechenden Außenumfangsteilflächen der weiteren Flügel 117, 118, 119 und 120 sind in der gezeigten Ausgestaltung eines Rotors jeweils Teilflächen einer Mantelfläche eines Kreiszylinders, dessen Schnitt mit einer Stirnseite durch die gestrichelte kreisförmige Linie 121 angedeutet ist. Der Rotor ist für eine Rotation um eine Drehachse 102 vorgesehen, welche die Papierebene in einem Durchstoßpunkt senkrecht schneidet. Der erste Flügel 103 sowie die vier weiteren Flügel 117, 118, 119 und 120 sind allesamt im Wesentlichen radial von der Drehachse 102 wegweisend orientiert. In der gezeigten Ausgestaltung sind die gezeigten Flügel 117, 118, 119 und 120 jeweils in der gezeigten Sichtebene ebenensymmetrisch ausgebildet. Am Beispiel der Ebene 122 ist dies für einen der Flügel, nämlich den Flügel 120, dargestellt. Die Anordnung der Flügel ist in der gezeigten Ausbildung des Rotors 101 gleichmäßig in dem Sinne, dass die Symmetrieebene zweier nebeneinander positionierter Flügel für alle Paare zweier nebeneinander positionierter Flügel für alle Fälle gleich ist, die fünf Flügel des Rotors in der gezeigten Ausgestaltung also ein gleichseitiges Dreieck bilden. Der Winkel zwischen den Symmetrieebenen zweier nebeneinander positionierter Flügel beträgt in dem gezeigten Ausführungsbeispiel folglich 360 Grad/5 = 72 Grad. Auf der gezeigten ersten Stirnfläche 104 des Rotors 101 ist ein Erhebungsprofil 106 zu sehen, welches sich aus einem an der ersten Stirnfläche 104 angeordneten ersten Stegemuster 113, einem an der ersten Außenumfangsteilfläche 109 angeordneten Längsrillenprofil 107 sowie einem an dem Flügel 117 angeordneten Längsrillenprofil 126, einem an dem Flügel 118 angeordneten Längsrillenprofil 125, einem an dem Flügel 119 angeordneten Längsrillenprofil 124 sowie einem an dem fünften Flügel 120 angeordneten Längsrillenprofil 123 zusammensetzt. Das erste Stegemuster 113 weist beispielhaft einen Steg auf, der als mit der Drehachse koaxiale Linienerhebung 115 ausgebildet ist sowie des Weiteren beispielhaft einen Steg auf, der als von der Drehachse radial abgehend orientierte Linienerhebung 126 ausgebildet ist.
In der Ausgestaltung des Rotors, welche der Fig. 1 zu entnehmen ist, sind neben der koaxialen Linienerhebung 115 sowie der radialen Linienerhebung 126 noch eine Vielzahl weiterer koaxialer Linienerhebungen sowie radial abgehend orientierter Linienerhebungen an der ersten Stirnfläche 104 des Rotors 101 ausgebildet, die hier nicht im Einzelnen mit Bezugszeichen versehen sind. Wie der Fig. 1 des Weiteren zu entnehmen ist, weist das erste Stegemuster 113 eine Anzahl von als Linienerhebungen ausgebildeten Stegen 145 auf, welche das erste Stegemuster vollständig umlaufend umgrenzen.

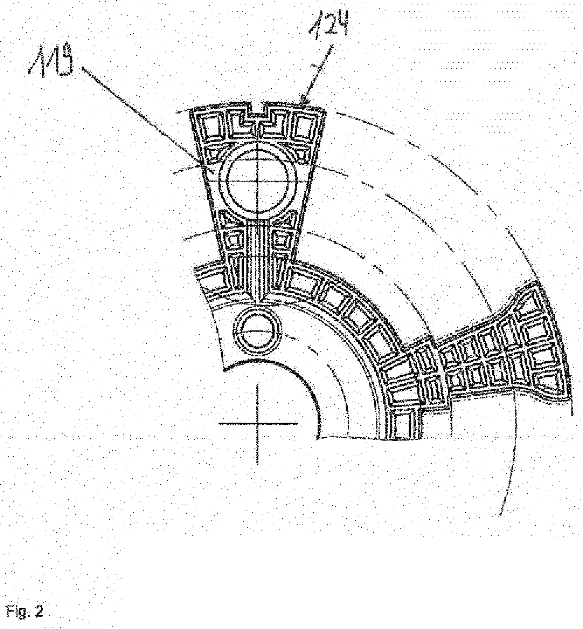

Der Fig. 2 ist ein Ausschnitt aus der Fig. 1 gemäß der Markierung "V" zu entnehmen, dem in der Fig. 1 gezeigte Merkmale noch einmal in besserer Detailwiedergabe zu entnehmen sind.

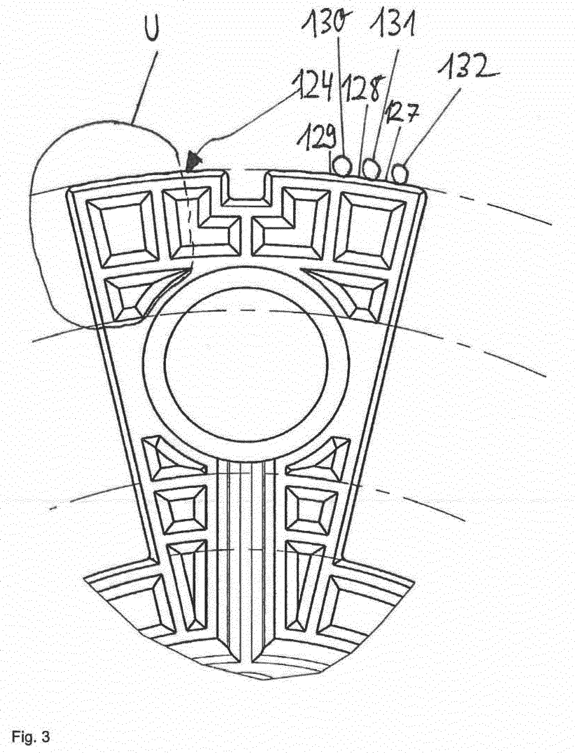

Der Fig. 3 ist ein weiterer Ausschnitt aus der Fig. 1 zu entnehmen, welcher der Markierung "Y" entspricht. Neben den bereits der Fig. 1 beziehungsweise der Fig. 2 zu entnehmenden Merkmalen ist in der in Fig. 3 gezeigten Vergrößerungsstufe der Fig. 3 insbesondere zu entnehmen, wie sich eine Ausbildung des Längsrillenprofils, hier am Beispiel des Längsrillenprofils 124 an der Außenumfangsteilfläche 124 des Flügels 119, in einem Querschnitt darstellt. Beispielhaft sind die Längsrillen 127, 128 und 129 bezeichnet. Zwischen den Längsrillen befindet sich jeweils ein Zwischental. Dieses Zwischental ist an dem Beispiel der gezeigten Längsrillen, beispielsweise am Beispiel des Zwischentals zwischen den Längsrillen 127 und 128 mit einem kreisabschnittförmigen Querschnitt ausgebildet, wie es am vorgenannten Beispiel durch den Kreis 130 sowie durch die Kreise 131 und 132 angedeutet ist.

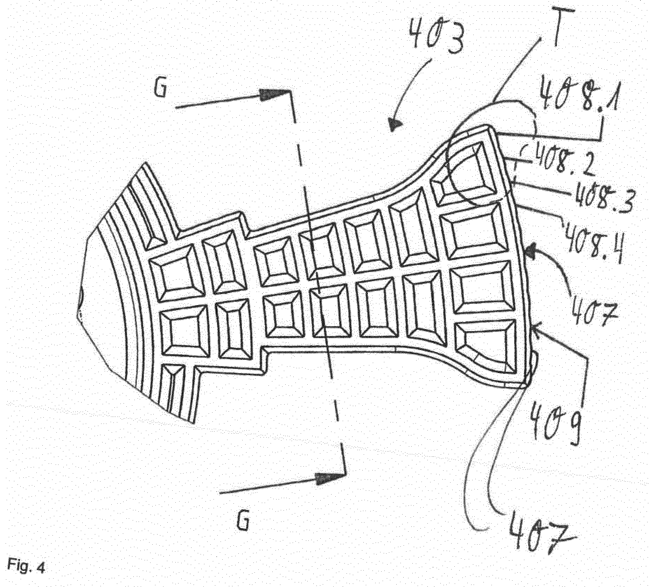

In Fig. 4 ist ein Ausschnitt aus einer weiteren Ausgestaltung eines Rotors für ein Nockenwellenversteller zu entnehmen. Dem Ausschnitt ist beispielhaft der erste Flügel 403 zu entnehmen. In der gezeigten Vergrößerungsstufe ist insbesondere zu entnehmen, wie an der ersten Außenumfangsteilfläche 409 das gezeigte Längsrillenprofil 407 ausgebildet ist. Hierfür sind Längsrillen 408.1, 408.2, 408.3, 408.4, sowie über die gesamte Winkelausdehnung der ersten Außenumfangsteilfläche 409 weitere ausgebildete Längsrillen, angeordnet. Auch in der Darstellung der Fig. 4 handelt es sich bei den Längsrillen um Längsrillen, welche eine kreisabschnittförmige Querschnittsfläche aufweisen.

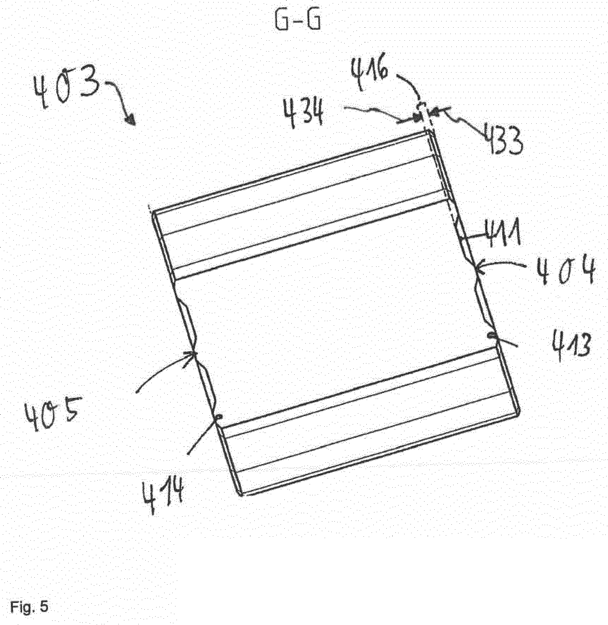

Der Fig. 5 ist ein Querschnitt des in der Fig. 4 gezeigten Flügels 403 entlang der Sichtachse "G-G" zu entnehmen. Es ist dem in der Fig. 5 gezeigten Querschnitt zu entnehmen, inwiefern an einer der ersten Stirnfläche 404 gegenüber liegenden zweiten Stirnfläche 405 ein zweites Stegemuster 414 angeordnet ist. Ebenfalls der Fig. 5 zu entnehmen ist das an der ersten Stirnfläche 404 angeordnete erste Stegemuster 413. Als weiteres ist der Fig. 5 zu entnehmen, wie zwischen zwei benachbarten Stegen, hier am Beispiel des ersten Stegemusters, eine Vertiefung 411 ausgebildet ist. Die maximale axiale Erstreckung zwischen einer Talsohle der Vertiefung 411 und einem Hügelrücken des jeweiligen Stegs stellt die Erhebungshöhe 416 dar, welche durch zwei gestrichelte Linien und die Pfeile 433 und 434 dargestellt ist.

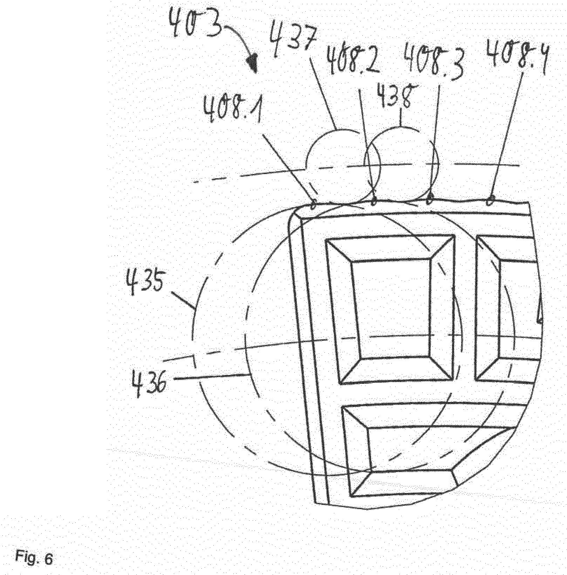

In der Fig. 6 ist eine weitere Darstellung eines Ausschnitts eines Flügels 403 eines Rotors gezeigt, wobei der gezeigte Ausschnitt dem Ausschnitt "U" aus Fig. 3 entspricht. Der Fig. 6 ist insbesondere auch eine bevorzugte Ausgestaltung des Längsrillenprofils 407 mit den beispielhaft gezeigten Längsrillen 408.1, 408.2, 408.3 sowie 408.4 zu entnehmen. Wie durch Kreis 435 für den Fall der Längsrille 408.1 sowie durch den Kreis 436 für den Fall der Längsrille 408.2 symbolisiert ist, handelt es sich bei den Längsrillen 408.1 und 408.2 sowie den übrigen gezeigten Längsrillen 408.2 und 408.4 sowie ebenfalls auch für die nicht gezeigten Längsrillen des Flügels des ersten Flügels 403 um Längsrillen mit einer kreisabschnittförmigen Querschnittfläche. In der in Fig. 6 gezeigten Ausgestaltung sind auch die Zwischentäler zwischen den Längsrillen mit einer kreisabschnittförmigen Querschnittfläche ausgebildet. Dies ist beispielhaft durch den Kreis 437 für die zwischen der Längsrille 408.1 und 408.2 angeordnete Vertiefung sowie durch den Kreis 438 für die zwischen der Längsrille 408.3 und 408.4 angeordnete Vertiefung symbolisch dargestellt.

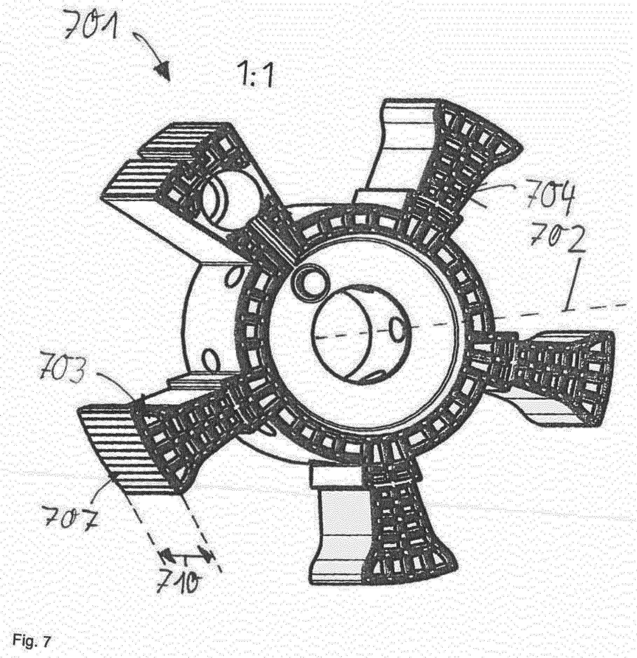

Der Fig. 7 ist eine perspektivische Darstellung einer weiteren Ausgestaltung eines weiteren Rotors 701 zu entnehmen. Insbesondere ist der perspektivischen Ausbildung des Rotors 701 eine perspektivische Darstellung der ersten Stirnfläche 704 zu entnehmen. Weiterhin ist in dieser perspektivischen Ansicht auch an zwei Flügeln das vorgesehene Längsrillenprofil 707 zu entnehmen. Beispielhaft ist für den ersten Flügel 703 das Längsrillenprofil 707 dargestellt. Der Rotor 701 ist zur Rotation um eine Drehachse 702 vorgesehen, welche in der perspektivischen Darstellung durch die gestrichelte Linie 704 dargestellt ist. Des Weiteren ist der in Fig. 7 dargestellten Ausgestaltung eines Rotors 701 die Begrifflichkeit einer Außenumfangsteilflächenhöhe 710 skizziert.

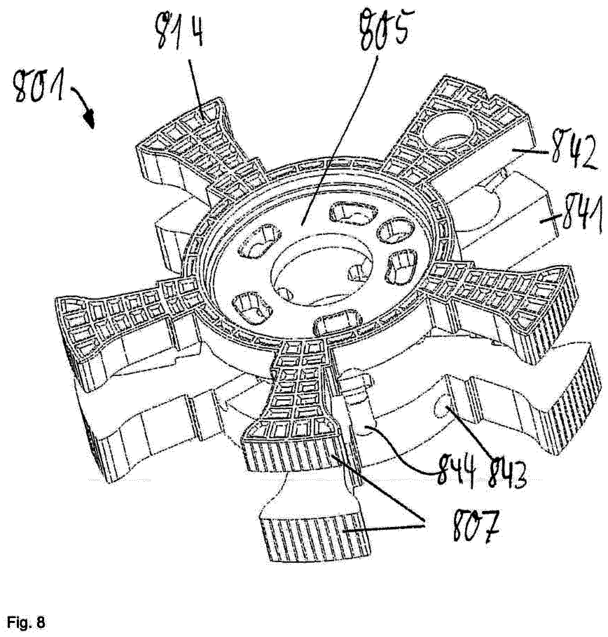

Der Darstellung der Fig. 8 ist eine weitere Ausgestaltung eines Rotors 801 zu entnehmen. In der Darstellung des Rotors 801 ist zu entnehmen, dass es sich bei der in Fig. 8 gezeigten Darstellung um eine Ausgestaltung des Rotors 801 handelt, welche aus zwei separat hergestellten Rotorteilen gefügt ist. In der Darstellung der Fig. 8 handelt es sich um einen Rotor 801 welcher aus einem ersten Rotorteil 841 sowie einem zweiten Rotorteil 842 gefügt ist. Um die beiden Rotorteile unabhängig voneinander darstellen zu können, handelt es sich bei der in Fig. 8 gezeigten Darstellung um eine Explosionsdarstellung. In der Explosionsdarstellung ist insbesondere auch zu entnehmen, dass der Rotor Fluidkanäle aufweist. So sind beispielsweise die Fluidkanäle 843 und 844 gezeigt. Des Weiteren sind der Fig. 8 eine Ausbildung der zweiten Stirnfläche 805 und des zweiten Stegmusters 814 zu entnehmen.

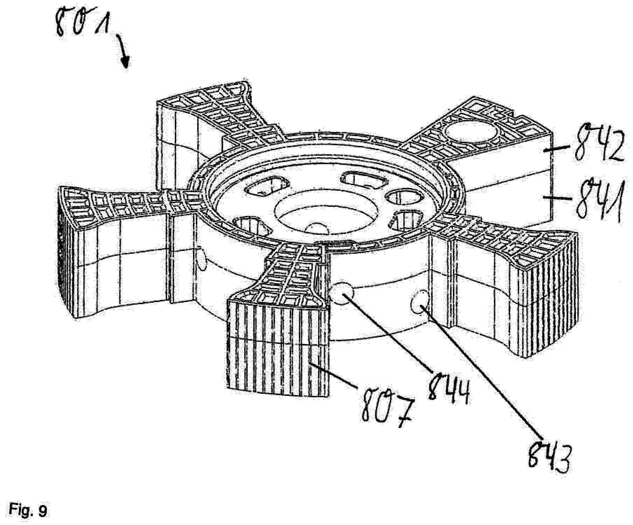

Der Fig. 9 ist die Ausgestaltung des in der Fig. 8 gezeigten Rotors in einer gefügten Darstellung zu entnehmen.

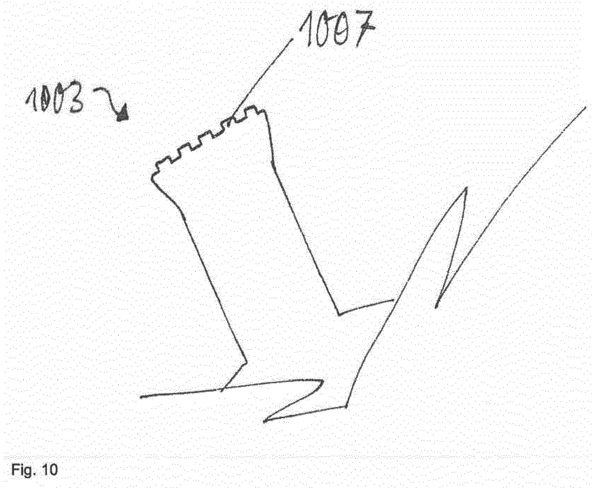

In der Fig. 10 ist eine Ausgestaltung eines ersten Flügels 1003 einer Ausgestaltung eines Rotors dargestellt, in welcher das Längsrillenprofil 1007 aus Längsrillen mit einer rechteckförmigen Querschnittsfläche ausgebildet ist. Auch das zwischen zwei benachbarten Längsrillen befindliche Zwischental weist eine rechteckförmige Querschnittfläche auf. In einer bevorzugten Ausbildung kann vorgesehen sein, dass eine Erhebungshöhe der Längsrillen zwischen 0,15 mm und 0,25 mm beträgt und ein Abstand zweier benachbarter Längsrillen voneinander 1,50 mm beträgt.

Ebenfalls kann vorgesehen sein, dass der Abstand zweier benachbarter Längsrillen voneinander höchstens 1,50 mm beträgt.

## Patentansprüche

1. Rotor (101, 701, 801) für einen Nockenwellenversteller, wobei der Rotor (101, 701, 801) für eine Rotation um eine Drehachse (102, 702) vorgesehen ist und wenigstens einen in im Wesentlichen radial von der Drehachse (102, 702) wegweisender Richtung sich erstreckenden ersten Flügel (103, 403, 703, 1003) aufweist,
und wobei eine Oberfläche des Rotors (101, 701, 801) aufweist:
- wenigstens eine erste Stirnfläche (104, 404, 704),
- wenigstens eine zur ersten Stirnfläche (104, 404, 704) parallele zweite Stirnfläche (405, 805),
- wenigstens eine erste Außenumfangsteilfläche (109, 409) des ersten Flügels (103, 403, 703, 1003),
wobei an der Oberfläche ein Erhebungsprofil (106) ausgebildet ist, wobei das Erhebungsprofil (106) wenigstens ein erstes Stegemuster (113, 413) mit wenigstens zwei Stegen aufweist, welches an der ersten Stirnfläche (104, 404, 704) angeordnet ist und/oder das Erhebungsprofil (106) wenigstens ein zweites Stegemuster (414, 814) mit wenigstens zwei Stegen aufweist, welches an der zweiten Stirnfläche (405, 805) angeordnet ist, **dadurch gekennzeichnet, dass** das erste Stegemuster (113, 413) und/oder das zweite Stegemuster (414, 814) jeweils vier Stege aufweisen, wobei jeweils zwei Stege aufeinander zulaufen und sich kreuzen, so dass vier Stege jeweils eine Vertiefung (411) bilden.

2. Rotor (101, 701, 801) nach Anspruch 1, **dadurch gekennzeichnet, dass** der Rotor aus zwei separat hergestellten Rotorteilen (841, 842) gefügt ist.

3. Rotor (101, 701, 801) nach Anspruch 1 oder nach Anspruch 2, **dadurch gekennzeichnet, dass** das Erhebungsprofil (106) wenigstens ein an der ersten Außenumfangsteilfläche (109, 409) angeordnetes Längsrillenprofil (107, 407, 707, 807, 1007) mit einer Anzahl von wenigstens zwei Längsrillen (408) aufweist.

4. Rotor (101, 701, 801) nach Anspruch 3, **dadurch gekennzeichnet, dass** wenigstens zwei, bevorzugt alle, Längsrillen (408), einem geradlinigen Verlauf folgen und/oder wenigstens zwei, bevorzugt alle, Längsrillen (408) des Längsrillenprofils (107, 407, 707, 807, 1007) zueinander parallel orientiert sind.

5. Rotor (101, 701, 801) nach Anspruch 3 oder nach Anspruch 4, **dadurch gekennzeichnet, dass** wenigstens zwei, bevorzugt alle, Längsrillen (408) in einer zur Drehachse (102, 702) parallelen Richtung orientiert sind.

6. Rotor (101, 701, 801) nach einem der Ansprüche 3 bis 5, **dadurch gekennzeichnet, dass** wenigstens eine, bevorzugt alle, Längsrillen (408) sich vollständig über eine gesamte Außenumfangsteilflächenhöhe (710) erstrecken.

7. Rotor (101, 701, 801) nach einem der Ansprüche 3 bis 6, **dadurch gekennzeichnet, dass** wenigstens eine Längsrille (408), bevorzugt alle Längsrillen (408), eine kreisabschnittförmige, ellipsenabschnittförmige, trapezförmige oder rechteckförmige Querschnittfläche aufweisen.

8. Rotor (101, 701, 801) nach einem der Ansprüche 3 bis 7, **dadurch gekennzeichnet, dass** wenigstens ein zwischen zwei benachbarten Längsrillen (408) befindliches Zwischental eine kreisabschnittförmige Querschnittfläche aufweist.

9. Rotor (101, 701, 801) nach einem der vorhergehenden Ansprüche, **dadurch gekennzeichnet, dass** das erste Stegemuster (113, 413) und/oder das zweite Stegemuster (414, 814) aufweist:
- wenigstens einen als im Wesentlichen mit der Drehachse (102, 702) koaxiale Linienerhebung ausgebildeten Steg und/oder
- wenigstens einen als im Wesentlichen von der Drehachse (102, 702) radial abgehend orientierte Linienerhebung ausgebildeten Steg.

10. Rotor (101, 701, 801) nach Anspruch 9, **dadurch gekennzeichnet, dass** das erste Stegemuster (113, 413) die gesamte erste Stirnfläche (104, 404, 704) ausfüllt und/oder das zweite Stegemuster (414, 814) die gesamte zweite Stirnfläche (405, 805) ausfüllt.

11. Rotor (101, 701, 801) nach Anspruch 9 oder nach Anspruch 10, **dadurch gekennzeichnet, dass** das erste Stegemuster (113, 413) eine Anzahl von als Linienerhebungen ausgebildeten Stegen aufweist, die das erste Stegemuster (113, 413) wenigstens teilweise, bevorzugt vollständig, umlaufend umgrenzen und/oder dass das zweite Stegemuster (414, 814) eine Anzahl von als Linienerhebungen ausgebildete Stege aufweist, die das zweite Stegemuster (414, 814) wenigstens teilweise, bevorzugt vollständig, umlaufend umgrenzen.

12. Rotor (101, 701, 801) nach einem der Ansprüche 9 bis 11, 1, **dadurch gekennzeichnet, dass** eine Erhebungshöhe der Linienerhebungen des ersten Stegemusters (113, 413) und/oder eine Erhebungshöhe der Linienerhebungen des zweiten Stegemusters (414, 814) 1,00 mm oder weniger beträgt.

13. Rotor (101, 701, 801) nach einem der Ansprüche 1 bis 12, **dadurch gekennzeichnet, dass**
- der Rotor (101, 701, 801) teilweise oder vollständig mittels eines Sinterverfahrens hergestellt ist und/oder
- dass der Rotor (101, 701, 801) teilweise oder vollständig aus einem Sintermetall, einem Sinterstahl und/oder einer Sinterkeramik besteht.

14. Verfahren zur Herstellung eines Rotors (101, 701, 801) nach einem der Ansprüche 1 bis 13 mit einem an der Oberfläche des Rotors (101, 701, 801) ausgebildeten Erhebungsprofil (106), wobei das Verfahren wenigstens die folgenden Schritte aufweist:
- Ausbilden eines Rotors (101, 701, 801), wobei der Rotor (101, 701, 801) wenigstens aufweist:
- einen ersten Flügel (103, 403, 703, 1003),
- eine Oberfläche, wenigstens umfassend eine erste Stirnfläche, eine zur ersten Stirnfläche (104, 404, 704) parallele zweite Stirnfläche (405, 805) sowie eine erste Außenumfangsteilfläche (109, 409) des ersten Flügels (103, 403, 703, 1003);
- Ausformen eines Erhebungsprofils (106) an der Oberfläche;
- ein nach dem Ausformen des Erhebungsprofils (106) erfolgendes Nachformen des Erhebungsprofils (106) unter Druckbeaufschlagung.

15. Verfahren nach Anspruch 14, **dadurch gekennzeichnet, dass** das Erhebungsprofil (106) wenigstens ein an der ersten Außenumfangsteilfläche (109, 409) aufweisendes Längsrillenprofil aufweist und dass das Nachformen des Erhebungsprofils (106) ein Kalibrieren des Längsrillenprofils aufweist.

16. Verfahren nach Anspruch 14 oder nach Anspruch 15, **dadurch gekennzeichnet, dass** das Erhebungsprofil (106) wenigstens ein erstes Stegemuster (113, 413) mit zwei Stegen aufweist, welches an der ersten Stirnfläche (104, 404, 704) angeordnet ist und/oder das Erhebungsprofil (106) wenigstens ein zweites Stegemuster (414, 814) mit zwei Stegen aufweist, welches an der zweiten Stirnfläche (405, 805) angeordnet ist, wobei das Nachformen des Erhebungsprofils (106) ein stirnseitiges Maßprägen aufweist.

17. Verfahren nach einem der Ansprüche 14 bis 16, dass das Ausbilden des Rotors (101, 701, 801) ein Fügen des Rotors (101, 701, 801) aus zwei separat hergestellten Rotorteilen umfasst, wobei das Nachformen des Erhebungsprofils (106) nach dem Fügen des Rotors (101, 701, 801) erfolgt.

## Claims

1. Rotor (101, 701, 801) for a camshaft adjuster, the rotor (101, 701, 801) being provided for a rotation about a rotational axis (102, 702) and having at least one first blade (103, 403, 703, 1003) which extends in a direction which points substantially radially away from the rotational axis (102, 702), and a surface of the rotor (101, 701, 801) having:
- at least one first end face (104, 404, 704),
- at least one second end face (405, 805) which is parallel to the first end face (104, 404, 704),
- at least one first outer circumferential part face (109, 409) of the first blade (103, 403, 703, 1003),
an elevation profile (106) being configured on the surface, the elevation profile (106) having at least one first web pattern (113, 413) with at least two webs, which first web pattern (113, 413) is arranged on the first end face (104, 404, 704), and/or the elevation profile (106) having at least one second web pattern (414, 814) with at least two webs, which second web pattern (414, 814) is arranged on the second end face (405, 805), **characterized in that** the first web pattern (113, 413) and/or the second web pattern (414, 814) have/has in each case four webs, in each case two webs running towards one another and crossing, with the result that four webs form in each case one depression (411) .

2. Rotor (101, 701, 801) according to Claim 1, **characterized in that** the rotor is joined together from two separately produced rotor parts (841, 842).

3. Rotor (101, 701, 801) according to Claim 1 or Claim 2, **characterized in that** the elevation profile (106) has at least one longitudinal groove profile (107, 407, 707, 807, 1007) which is arranged on the first outer circumferential part face (109, 409) with a number of at least two longitudinal grooves (408).

4. Rotor (101, 701, 801) according to Claim 3, **characterized in that** at least two, preferably all, longitudinal grooves (408) follow a rectilinear course and/or at least two, preferably all, longitudinal grooves (408) of the longitudinal groove profile (107, 407, 707, 807, 1007) are oriented in parallel with one another.

5. Rotor (101, 701, 801) according to Claim 3 or Claim 4, **characterized in that** at least two, preferably all, longitudinal grooves (408) are oriented in a direction which is parallel to the rotational axis (102, 702).

6. Rotor (101, 701, 801) according to one of Claims 3 to 5, **characterized in that** at least one, preferably all, longitudinal groove/grooves (408) extends/extend completely over an entire outer circumferential part face height (710).

7. Rotor (101, 701, 801) according to one of Claims 3 to 6, **characterized in that** at least one longitudinal groove (408), preferably all longitudinal grooves (408), has/have a circular section-shaped, elliptical section-shaped, trapezoidal or rectangular cross-sectional area.

8. Rotor (101, 701, 801) according to one of Claims 3 to 7, **characterized in that** at least one intermediate trough which is situated between two adjacent longitudinal grooves (408) has a circular section-shaped cross-sectional area.

9. Rotor (101, 701, 801) according to one of the preceding claims, **characterized in that** the first web pattern (113, 413) and/or the second web pattern (414, 814) have/has:
- at least one web which is configured as a linear elevation which is substantially coaxial with respect to the rotational axis (102, 702), and/or
- at least one web which is configured as a linear elevation which is oriented so as to substantially lead away radially from the rotational axis (102, 702).

10. Rotor (101, 701, 801) according to Claim 9, **characterized in that** the first web pattern (113, 413) fills the entire first end face (104, 404, 704) and/or the second web pattern (414, 814) fills the entire second end face (405, 805).

11. Rotor (101, 701, 801) according to Claim 9 or according to Claim 10, **characterized in that** the first web pattern (113, 413) has a number of webs which are configured as linear elevations and surround the first web pattern (113, 413) in an at least partially, preferably completely, circumferential manner, and/or in that the second web pattern (414, 814) has a number of webs which are configured as linear elevations and surround the second web pattern (414, 814) in an at least partially, preferably completely, circumferential manner.

12. Rotor (101, 701, 801) according to one of Claims 9 to 11, **characterized in that** an elevation height of the linear elevations of the first web pattern (113, 413) and/or an elevation height of the linear elevations of the second web pattern (414, 814) are/is 1.00 mm or less.

13. Rotor (101, 701, 801) according to one of Claims 1 to 12, **characterized in that**
- the rotor (101, 701, 801) is produced partially or completely by means of a sintering method, and/or
- **in that** the rotor (101, 701, 801) consists partially or completely of a sintered metal, a sintered steel and/or a sintered ceramic.

14. Method for producing a rotor (101, 701, 801) according to one of Claims 1 to 13 having an elevation profile (106) which is configured on the surface of the rotor (101, 701, 801), the method having at least the following steps:
- configuring a rotor (101, 701, 801), the rotor (101, 701, 801) having at least:
- a first blade (103, 403, 703, 1003),
- a surface, at least comprising a first end face, a second end face (405, 805) which is parallel to the first end face (104, 404, 704), and a first outer circumferential part face (109, 409) of the first blade (103, 403, 703, 1003);
- forming of an elevation profile (106) on the surface;
- reshaping of the elevation profile (106) under pressure loading, which reshaping takes place after the forming of the elevation profile (106).

15. Method according to Claim 14, **characterized in that** the elevation profile (106) has at least one longitudinal groove profile which has on the first outer circumferential part face (109, 409), and **in that** the reshaping of the elevation profile (106) comprises a calibration of the longitudinal groove profile.

16. Method according to Claim 14 or according to Claim 15, **characterized in that** the elevation profile (106) has at least one first web pattern (113, 413) with two webs, which first web pattern (113, 413) is arranged on the first end face (104, 404, 704), and/or the elevation profile (106) has at least one second web pattern (414, 814) with two webs, which second web pattern (414, 814) is arranged on the second end face (405, 805), the reshaping of the elevation profile (106) comprising end-side coining.

17. Method according to one of Claims 14 to 16, in that the configuring of the rotor (101, 701, 801) comprises joining together of the rotor (101, 701, 801) from two separately produced rotor parts, the reshaping of the elevation profile (106) taking place after the joining together of the rotor (101, 701, 801).

## Revendications

1. Rotor (101, 701, 801) pour un déphaseur d'arbre à cames, le rotor (101, 701, 801) étant destiné à tourner autour d'un axe de rotation (102, 702) et comprenant au moins une première ailette (103, 403, 703, 1003) s'étendant dans une direction s'éloignant sensiblement radialement de l'axe de rotation (102, 702),
et une surface du rotor (101, 701, 801) comprenant :
- au moins une première face frontale (104, 404, 704),
- au moins une deuxième face frontale (405, 805) parallèle à la première face frontale (104, 404, 704),
- au moins une première face partielle périphérique extérieure (109, 409) de la première ailette (103, 403, 703, 1003),
un profil d'élévation (106) étant formé sur la surface, le profil d'élévation (106) comprenant au moins un premier motif d'éléments jointifs (113, 413) doté d'au moins deux éléments jointifs, lequel premier motif est disposé sur la première face frontale (104, 404, 704) et/ou le profil d'élévation (106) comprenant au moins un deuxième motif d'éléments jointifs (414, 814) doté d'au moins deux éléments jointifs, lequel deuxième motif est disposé sur la deuxième face frontale (405, 805), **caractérisé en ce que** le premier motif d'éléments jointifs (113, 413) et/ou le deuxième motif d'éléments jointifs (414, 814) comprennent respectivement quatre éléments jointifs, deux éléments jointifs convergeant respectivement l'un vers l'autre et se croisant, de telle sorte que quatre éléments jointifs forment un évidement (411).

2. Rotor (101, 701, 801) selon la revendication 1, **caractérisé en ce que** le rotor est assemblé à partir de deux parties de rotor (841, 842) fabriquées séparément.

3. Rotor (101, 701, 801) selon la revendication 1 ou 2, **caractérisé en ce que** le profil d'élévation (106) comprend au moins un profil à rainures longitudinales (107, 407, 707, 807, 1007) disposé sur la première face partielle périphérique extérieure (109, 409) et doté de rainures longitudinales (408) au moins au nombre de deux.

4. Rotor (101, 701, 801) selon la revendication 3, **caractérisé en ce qu'**au moins deux, de préférence toutes les rainures longitudinales (408) suivent un tracé rectiligne et/ou au moins deux, de préférence toutes les rainures longitudinales (408) du profil à rainures longitudinales (107, 407, 707, 807, 1007) sont orientées parallèlement les unes aux autres.

5. Rotor (101, 701, 801) selon la revendication 3 ou 4, **caractérisé en ce qu'**au moins deux, de préférence toutes les rainures longitudinales (408) sont orientées dans une direction parallèle à l'axe de rotation (102, 702).

6. Rotor (101, 701, 801) selon l'une quelconque des revendications 3 à 5, **caractérisé en ce qu'**au moins une, de préférence toutes les rainures longitudinales (408) s'étendent complètement sur toute une hauteur de face partielle périphérique extérieure (710).

7. Rotor (101, 701, 801) selon l'une quelconque des revendications 3 à 6, **caractérisé en ce qu'**au moins une rainure longitudinale (408), de préférence toutes les rainures longitudinales (408) présentent une section transversale en forme de segment de cercle, en forme de segment d'ellipse, trapézoïdale ou rectangulaire.

8. Rotor (101, 701, 801) selon l'une quelconque des revendications 3 à 7, **caractérisé en ce qu'**au moins un creux intermédiaire situé entre deux rainures longitudinales adjacentes (408) présente une section transversale en forme de segment de cercle.

9. Rotor (101, 701, 801) selon l'une quelconque des revendications précédentes, **caractérisé en ce que** le premier motif d'éléments jointifs (113, 413) et/ou le deuxième motif d'éléments jointifs (414, 814) comprennent :
- au moins un élément jointif réalisé sous forme d'élévation linéaire sensiblement coaxiale à l'axe de rotation (102, 702) et/ou
- au moins un élément jointif réalisé sous forme d'élévation linéaire orientée de manière à s'étendre sensiblement radialement à partir de l'axe de rotation (102, 702).

10. Rotor (101, 701, 801) selon la revendication 9, **caractérisé en ce que** le premier motif d'éléments jointifs (113, 413) remplit toute la première face frontale (104, 404, 704) et/ou le deuxième motif d'éléments jointifs (414, 814) remplit toute la deuxième face frontale (405, 805).

11. Rotor (101, 701, 801) selon la revendication 9 ou 10, **caractérisé en ce que** le premier motif d'éléments jointifs (113, 413) comprend un certain nombre d'éléments jointifs réalisés sous forme d'élévations linéaires qui délimitent le premier motif d'éléments jointifs (113, 413) de manière périphérique au moins partiellement, de préférence complètement et/ou le deuxième motif d'éléments jointifs (414, 814) comprend un certain nombre d'éléments jointifs réalisés sous forme d'élévations linéaires qui délimitent le deuxième motif d'éléments jointifs (414, 814) de manière périphérique au moins partiellement, de préférence complètement.

12. Rotor (101, 701, 801) selon l'une quelconque des revendications 9 à 11, **caractérisé en ce qu'**une hauteur des élévations linéaires du premier motif d'éléments jointifs (113, 413) et/ou une hauteur des élévations linéaires du deuxième motif d'éléments jointifs (414, 814) sont inférieures ou égales à 1,00 mm.

13. Rotor (101, 701, 801) selon l'une quelconque des revendications 1 à 12, **caractérisé en ce que**
- le rotor (101, 701, 801) est fabriqué partiellement ou complètement à l'aide d'un procédé de frittage et/ou
- **en ce que** le rotor (101, 701, 801) est constitué partiellement ou complètement d'un métal fritté, d'un acier fritté et/ou d'une céramique frittée.

14. Procédé de fabrication d'un rotor (101, 701, 801) selon l'une quelconque des revendications 1 à 13, comprenant un profil d'élévation (106) formé sur la surface du rotor (101, 701, 801), le procédé comprenant au moins les étapes suivantes :
- réalisation d'un rotor (101, 701, 801), le rotor (101, 701, 801) comprenant au moins :
- une première ailette (103, 403, 703, 1003),
- une surface, comportant au moins une première face frontale, une deuxième face frontale (405, 805) parallèle à la première face frontale (104, 404, 704) ainsi qu'une première face partielle périphérique extérieure (109, 409) de la première ailette (103, 403, 703, 1003) ;
- formage d'un profil d'élévation (106) sur la surface ;
- un post-formage du profil d'élévation (106), s'effectuant après le formage du profil d'élévation (106), avec application de pression.

15. Procédé selon la revendication 14, **caractérisé en ce que** le profil d'élévation (106) comprend au moins un profil à rainures longitudinales ayant sur la première face partielle périphérique extérieure (109, 409) et **en ce que** le post-formage du profil d'élévation (106) comprend un calibrage du profil à rainures longitudinales.

16. Procédé selon la revendication 14 ou 15, **caractérisé en ce que** le profil d'élévation (106) comprend au moins un premier motif d'éléments jointifs (113, 413) doté de deux éléments jointifs, lequel est disposé sur la première face frontale (104, 404, 704) et/ou le profil d'élévation (106) comprend au moins un deuxième motif d'éléments jointifs (414, 814) doté de deux éléments jointifs, lequel est disposé sur la deuxième face frontale (405, 805), le post-formage du profil d'élévation (106) comprenant un matriçage à dimension du côté frontal.

17. Procédé selon l'une quelconque des revendications 14 à 16, que la réalisation du rotor (101, 701, 801) comporte un assemblage du rotor (101, 701, 801) à partir de deux parties de rotor fabriquées séparément, le post-formage du profil d'élévation (106) s'effectuant après l'assemblage du rotor (101, 701, 801).
